# EUROPEAN PATENT SPECIFICATION

(11) **EP 2 861 083 B1**
(45) Date of publication and mention of the grant of the patent: **28.11.2018**
(21) Application number: 13783122.8
(22) Date of filing: 06.06.2013
(51) Int. Cl.: A23G 4/06, A23G 4/18, B65D 85/60

(54) **BULK PACKAGED, UNCOATED CHEWING GUM**
MASSENWEISE VERPACKTES UNBESCHICHTETES KAUGUMMI
GOMME À MÂCHER NON ENDUITE, EMBALLÉE EN MASSE

(30) Priority: 19.06.2012 US 201261661545 P
(43) Date of publication of application: 22.04.2015
(60) Divisional application: 18191755.0
(73) Proprietor: Intercontinental Great Brands LLC, East Hanover, NJ 07936 (US)
(72) Inventor: DAVIS, Brooke, Whippany, New Jersey 07981 (US); O'NEILL, Simone, Whippany, New Jersey 07981 (US); LAVIN, Joseph, Whippany, New Jersey 07981 (US); BELL, Larissa, Whippany, New Jersey 07981 (US); MADIWALE, Gaurav, Whippany, New Jersey 07981 (US)
(74) Representative: Boult Wade Tennant LLP
(86) International application number: PCT/US2013/044443
(87) International publication number: WO 2014/007936

(56) References cited:
- WO-A1-93/05662
- WO-A1-95/17827
- WO-A1-97/26798
- WO-A1-02/094032
- WO-A1-2008/141643
- WO-A2-2008/022321
- US-A- 5 206 042

## Description

### FIELD

This disclosure generally relates to unwrapped and uncoated chewing gum; as well as bulk packaged unwrapped chewing gum.

### BACKGROUND

Chewing gum is manufactured in a variety of shapes including gum ball, traditional pellet, and flat slab, to name a few common shapes. The choice of shape can depend upon consumer preference, processing convenience, and other factors. WO 97/26798 discloses a method of manufacturing chewing gum wherein spray dried mannitol is applied to the chewing gum.

Certain chewing gum compositions are known to either gain moisture from the surroundings or lose moisture to the surroundings depending upon the chewing gum ingredients and the relative humidity of the surrounding environment.

Round or compact pellet shapes can conveniently be coated with a hard panned coating to provide protection from the environment due to gain of moisture from the air or loss of moisture from the gum. The hard coating also prevents the individual pieces from sticking to one another when bulk packaged as loose units and further provides a hard initial crunch when chewed.

Slab or other elongated and flat formats are not typically hard coated due to the difficulty in obtaining an even coating on the entire surface. One solution for preventing moisture gain or loss for slab formats is to piece wrap each piece of chewing gum individually. The wrapper acts as a moisture barrier and is the most common approach for packaging slab chewing gum formats. Furthermore, slab chewing gum pieces are typically piece wrapped individually and packaged as there is a tendency for the pieces to stick to one another. However, piece wrap can be expensive and result in multiple pieces of waste wrap produced during the product's time of use, which the consumer may find undesirable.

Consumers desiring chewing gum in loose bulk packaging without piece wrap around each individual unit are limited to hard coated chewing gum balls or pellets or sanded cube-shaped products. However, the hard coating provides an initial hard crunch rather than a soft initial bite experienced with uncoated slab products. Furthermore, the hard coating or other coating formats obscure or prevent the visual properties of the chewing gum core, such as color, designs, etc., to be perceived by the consumer.

There remains a need in the art for loose bulk packaged, uncoated chewing gum in slab or slab-like formats which provides the combination of an initial soft chew, product stability after exposure to ambient conditions due to repeated opening and closing of the bulk container, and which allows for the visual aspects of the chewing gum core to be perceived by the consumer.

### SUMMARY

In one embodiment, a packaged plurality of chewing gum comprises a container; and
a plurality of elongated chewing gum pellets housed within the container, the elongated chewing gum pellets having a curvilinear shaped surface, and comprising a dusting composition on the surface of each elongated chewing gum pellet; wherein each elongated chewing gum pellet is free of piece wrap and free of a coating; and wherein the dusting composition comprises mannitol.

In another descriptive embodiment, a chewing gum product comprises an elongated chewing gum pellet having a curvilinear shaped surface, and a dusting composition on the surface of the elongated chewing gum pellet; wherein the dusting composition comprises mannitol; and wherein the elongated chewing gum pellet is free of piece wrap and free of a coating.

The above described and other features are exemplified by the following figures and detailed description.

### BRIEF DESCRIPTION OF THE DRAWINGS

Referring now to the figures are exemplary embodiments, and which may or may not be drawn to scale.

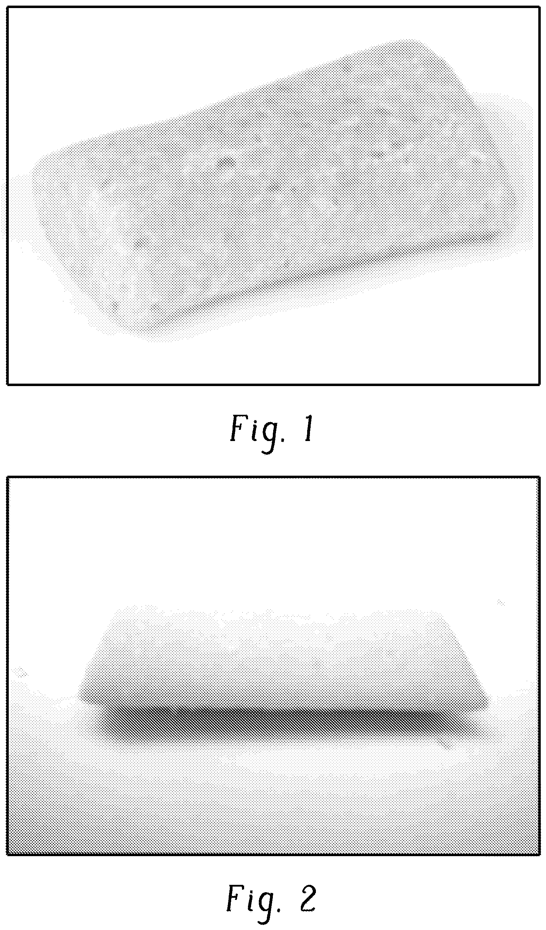

FIG. 1 illustrates a ¾ view of an embodiment of an elongated chewing gum pellet having a flattened cylinder shape with a curvilinear shape at the largest surface.
FIG. 2 illustrates a side view an embodiment of an elongated chewing gum pellet having a flattened cylinder shape with a curvilinear shape at the largest surface.

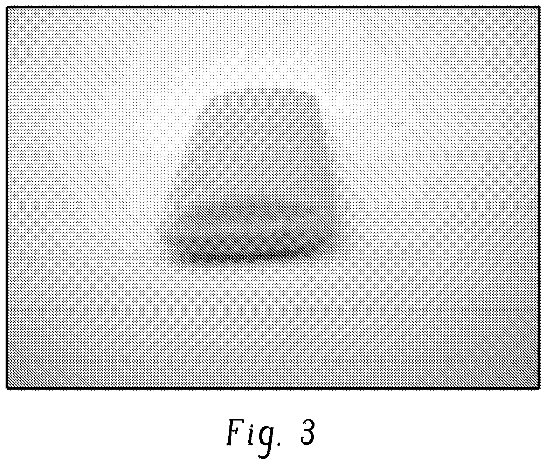

FIG. 3 illustrates an end view embodiment of an elongated chewing gum pellet having a flattened cylinder shape with a curvilinear shape at the largest surface.

### DETAILED DESCRIPTION

Disclosed herein are bulk packaged, uncoated chewing gum that is free of piece wrap and which exhibits excellent stability with regard to non-sticking of the loose chewing gum pieces while at the same time providing the consumer with a soft initial bite, a slab-like format, and ability to see the appearance of the chewing gum surface. It has been found that the combination of low hygroscopic dusting composition and an elongated chewing gum piece shape having a curvilinear surface shape allows for a plurality of the chewing gum pieces to be bulk packaged without piece wrap while avoiding unacceptable sticking of individual pieces to one another during the shelf-life of the product and during a typical life cycle of the product during consumption after the package has been opened. Since the chewing gum pieces are uncoated, the color, design, and format of the chewing gum piece can be perceived by the consumer.

As used herein, the terms "stability" and "stable" refer to the elongated gum pellet pieces exhibiting minimal moisture pick-up and resistance of the pieces from sticking to one another or the container during shelf life and during typical product use.

In one embodiment, a chewing gum product comprises an elongated chewing gum pellet having a curvilinear shaped surface, and a dusting composition on the surface of the elongated chewing gum pellet; wherein the dusting composition comprises mannitol; and wherein the elongated chewing gum pellet is free of piece wrap and free of a coating such as a hard panned outer shell, a soft panned coating, a sanding coating, or any other surface treatment except for a dusting treatment.

In another embodiment, a packaged plurality of chewing gum comprises a container; and
a plurality of elongated chewing gum pellets having a curvilinear shaped surface, and comprising a dusting composition on the surface of each elongated chewing gum pellet; wherein each elongated chewing gum pellet is free of piece wrap and free of a coating; and wherein the dusting composition comprises mannitol. When bulk packaged without piece coating, the elongated chewing gum pellet shape and the dusting composition prevents the pellets from adhering to one another in the container during storage and use, and to freely pour from the container as individual units.

In one embodiment, the packaged plurality of chewing gum pellets exhibit stability, wherein less than 7 elongated chewing gum pellets out of an initial 35 pellets stick to one another after the plurality has been in direct contact with each other within the container for at least five days, specifically at least 7 days, more specifically at least 8 days, and yet more specifically at least ten days at 37°C and a daily exposure to 80% relative humidity for six hours during which two pellets are removed from the container per day to mimic usage conditions.

### Chewing gum piece shape and format

The chewing gum piece shape for use in loose bulk packaging is generally formed as a slab-like shape for consumer familiarity and acceptance to the known flat slab shapes. Rather than a flat slab format, however, an elongated chewing gum pellet having a curvilinear slab format is used. The curvilinear shape for the largest surface or surfaces of the elongated chewing gum pellet prevents substantial contact between the pieces. Not wishing to be bound by theory, but it is suggested that the elongated chewing gum pellet shape results in increased product stability when packaged in bulk without piece wrap due to a lower amount of surface area where individual pieces are in contact with one another.

The piece shape for the elongated chewing gum pellet can generally be a curvilinear slab-like format, having a shape where the length > width ≥ thickness measured using the longest distance for each dimension. The length (longest dimension) can be 18 to 45 millimeters, specifically 21 to 42 mm, more specifically 24 to 39 mm, yet more specifically 27 to 36, and still yet more specifically 30 to 33 mm. The width can be 6 to 14 mm, specifically 7 to 12 mm, and more specifically 8 to 10 mm. The thickness can be 2 to 10 mm, specifically 4 to 8 mm, and more specifically 5 to 7

In one embodiment, the elongated chewing gum pellet has a shape where the length is greater than or equal to 2 times the width and the width is greater than or equal to 2 times the thickness.

In one embodiment, the elongated chewing gum pellet is a slab-like format having a generally rectangular shape, with rounded edges/corners, and a curvilinear shape for the surfaces of the plane having the longest dimension. In another embodiment, the elongated chewing gum pellet is a slab-like format having a generally flattened cylinder shape with a curvilinear shape for the surfaces of the plane having the longest dimension. In another embodiment, the elongated chewing gum pellet has a rod-like shape.

There is no limitation to the weight of the discrete piece of the chewing gum composition. In an embodiment, each discrete unit is 1.5 to 3.0 grams (g), specifically 1.8 to 2.7 g, and more specifically 2.3 to 2.5 g.

In an embodiment, the chewing gum pieces are monolithic, solid chewing gum composition.

In another embodiment, the chewing gum may further comprise a center-fill including liquid, semi-solid, solid (including powder), center-fill material. The center-filled chewing gum may be formed by any technique known in the art for forming center-filled confectionery. The method may generally include first extruding a center-filled rope of a chewing gum composition and passing the rope through a sizing mechanism including a series of pairs of pulley-shaped roller members. The roller members "size" the rope or strand of gum material such that it leaves the series of rollers with the desired size and shape for entering a piece-forming mechanism.

In yet another embodiment, the chewing gum piece may also be formatted in a layered structure having two or more layers of chewing gum or gum base or alternating layers of chewing gum and a non-chewing gum confectionery. Within this embodiment, the chewing gum is a layered structure having one or more layers of chewing gum or gum base and one or more layers of a non-chewing gum confectionery, specifically a layer of a non-chewing gum confectionery sandwiched between two layers of chewing gum or gum base. The center layer of non-chewing gum confectionery can be exposed on one two, three or four sides of the chewing gum piece. Exemplary multi-layered formats can be found in copending applications U.S. Serial Nos. 12/913058 filed 10/27/2010, 12/990096 filed 05/01/2009, 12/990319 filed 05/01/2009, and 12/990546 filed 05/01/2009.

### Chewing gum dusting composition

The elongated chewing gum pellets are bulk packed as a plurality of loose, unwrapped pieces that have been surface treated with a powder dusting composition that exhibits low hygroscopicity.

The elongated chewing gum pellets comprise a dusting composition but are substantially free of, more specifically free of, a coating or outer shell such as a panned coating (hard or soft), a sanding treatment, or other surface treatment except for a dusting composition. As used herein, "dusting" and "dusted" are specifically excluded from the term "coating" and a dusted chewing gum pellet free of any other surface treatment is not to be considered a coated chewing gum pellet. As used herein, "uncoated" and "without coating" when used to describe the elongated chewing gum pellets means there is no coating on the chewing gum piece although the piece contains a dusting composition.

As used herein "surface treatment" means the surface of the chewing gum has been treated with a coating (hard, soft, sanding, etc.) or a dusting medium.

A sanding treatment differs from a dusting treatment by the size of the particulates and how the particulates are typically adhered to the substrate. Dusting typically involves the use of a powder dusting material having a small particle size, e.g. particulates having a particle size of less than about 150 micrometers. Additionally, a binder liquid is not used to adhere the dusting material to the chewing gum core. Often electrostatic forces adhere the dusting composition to the chewing gum rather than using some adhesive material. In comparison, sanding typically involves the use of larger sized particulates, e.g. having a particle size of 200 to 700 micrometers or more, and the use of a binder liquid to help adhere the particulates to the chewing gum core.

The dusting composition at least partially surrounds the elongated chewing gum pellet core, specifically completely surrounding the elongated chewing gum pellet core.

As used herein, the terms "surround", "surrounding", "at least partially surrounding", and the like are not limited to encircling. These terms may refer to enclosing or confining on all sides, encircling or enveloping, and are not limited to symmetrical or identical thicknesses.

As used herein, the term "substantially covers" and "substantially surrounding" refers to dusting compositions that cover more than 50% of the surface area of an elongated chewing gum pellet core. In other embodiments, "substantially covers" may refer to coverage that is more than 55%, more than 60%, more than 65%, more than 70%, more than 75%, more than 80%, more than 85%, more than 90%, more than 95%, more than 98%, and more than 99% of the surface of an elongated chewing gum pellet core.

The dusting composition comprises powdered mannitol, or powdered mannitol combined with another low hydroscopic powder material such as talc, limestone, CaCO3, or a combination thereof. When used with mannitol, the other low hydroscopic powder material can be used in an amount of less than 80 wt%, specifically less than 60 wt%, more specifically less than 40 wt%, yet more specifically less than 20 wt%, and still yet more specifically about 10 wt% or less based on the total weight of the mannitol and other low hydroscopic powder material. In one embodiment, the dusting composition consists of powdered mannitol.

The dusting composition may be present in the final elongated chewing gum pellet piece in an amount from 0.8 to 2.0 weight percent (wt%), specifically 0.9 to 1.8 wt%, yet more specifically 1.0 to 1.6 wt%, and still yet more specifically 1.2 to 1.4 wt% based on the total weight of the final elongated chewing gum pellet piece measured at the time of packaging. Too little dusting composition leads to the potential that the individual chewing gum pieces will stick to one another. Too much dusting composition leads to chewing gum pieces having a poor appearance and obscures the visual aspects of the surface of the chewing gum product. Too much dusting can also affect the initial taste and adversely affect the chew texture of the chewing gum. Additionally, there is a cost savings if less dusting composition is used.

### Chewing gum composition

In general the chewing gum comprises a gum base and a bulk sweetener.

The bulk sweetener of the chewing gum can be a sugar-based or sugar-free bulk sweetener, specifically sugar-free. Bulk sugar sweeteners generally include saccharides. Suitable sugar sweeteners include mono-saccharides, di-saccharides and poly-saccharides such as but not limited to, sucrose (sugar), dextrose, maltose, dextrin, xylose, ribose, glucose, mannose, galactose, fructose (levulose), lactose, invert sugar, fructo oligo saccharide syrups, partially hydrolyzed starch, corn syrup solids, such as high fructose corn syrup, or a combination thereof.

The bulk sweetener can also be a sugar-free bulk sweetener such as a sugar alcohol. The sugar alcohol can be erythritol, galactitol, isomalt, a hydrogenated starch hydrolyzate, lactitol, maltitol, mannitol, polyglycitol, sorbitol, xylitol, and the like, or a combination thereof. The sugar alcohol can be in powdered or particulate form (either crystalline or amorphous) or in syrup form (also referred to as "solution") with water. Exemplary sugar alcohol syrups include sorbitol syrup, maltitol syrup, hydrogenated starch hydrolysate syrup, polyglycitol syrup, and the like.

The amount of bulk sweetener in the chewing gum composition can be 1 to 85 wt% based on the total weight of the chewing gum, specifically 10 to 75 wt%, more specifically 20 to 65 wt%, yet more specifically 30 to 55 wt%, and yet more specifically 40 to 45 wt%.

The stability of the chewing gum pieces can be improved by using a bulk sweetener or bulk sweetener blend having a low degree of hygroscopicity. For example, mannitol and maltitol are less hygroscopic sugar polyols as compared to sorbitol.

In one embodiment, the elongated chewing gum pellet comprises a bulk sweetener having a low hygroscopicity such that the relative humidity at which water uptake starts at 20°C is greater than or equal to 80%.

The chewing gum may further comprise an additional ingredient wherein the additional ingredient is a flavorant, a food acid or salt thereof, a high intensity sweetener, a sensate, a flavor modulator or potentiator, a coloring agent, a functional ingredient, a hydrocolloid, a humectant, or a combination thereof.

Exemplary flavorants (flavor, flavoring agent) for use in the chewing gum can include those artificial or natural flavors known in the art, for example synthetic flavor oils, natural flavoring aromatics and/or oils, oleoresins, extracts derived from plants, leaves, flowers, fruits, and the like, or a combination thereof. Nonlimiting representative flavors include oils such as spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, cassia oil, and citrus oils including lemon, orange, lime, grapefruit, vanilla, fruit essences, including apple, pear, peach, grape, strawberry, raspberry, blackberry, cherry, plum, pineapple, apricot, banana, melon, tropical fruit, mango, mangosteen, pomegranate, papaya, honey lemon, and the like, or a combination thereof. Specific flavorants are mints such as peppermint, spearmint, artificial vanilla, cinnamon derivatives, and various fruit flavors.

Other types of flavorants include various aldehydes and esters such as cinnamyl acetate, cinnamaldehyde, citral diethylacetal, dihydrocarvyl acetate, eugenyl formate, p-methylamisol, acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin).

The flavorant can be used in liquid or solid form. The flavorant can be used in free form or encapsulated form. When used in solid (dry) form, suitable drying means such as spray drying a flavor oil can be used. Alternatively, the flavorant can be encapsulated, absorbed onto water soluble materials by means known in the art, for example cellulose, starch, sugar, maltodextrin, gum arabic, and the like. In an embodiment, the flavorant can be used in physical forms effective to provide an initial burst of flavor or a prolonged sensation of flavor.

More than one flavorant can be used. The amount and type of flavorant can be chosen based on the targeted release profile and flavor intensity desired. The chewing gum composition generally comprises a flavorant in an amount of 0.001 to 5 wt% based on the total weight of the chewing gum composition, specifically 0.01 to 4 wt%, yet more specifically 0.1 to 3 wt%, and still yet more specifically 1.0 to 2wt%.

Exemplary food acids or salts thereof for use in the chewing gum can include acetic acid, adipic acid, ascorbic acid, butyric acid, citric acid, formic acid, fumaric acid, glyconic acid, lactic acid, phosphoric acid, malic acid, oxalic acid, succinic acid, tartaric acid, and alkali metal salts thereof (e.g., sodium citrate dihydrate), or a combination thereof. The food acid or salt thereof may be used in free form or in an encapsulated form

The chewing gum composition may further contain a high intensity sweetener. A "high intensity sweetener" as used herein means agents having a sweetness greater than the sweetness of sucrose. In an embodiment, a high intensity sweetener has a sweetness that is at least 100 times that of sugar (sucrose) on a per weight basis, specifically at least 500 times that of sugar on a per weight basis. In an embodiment the high intensity sweetener is at least 1,000 times that of sugar on a per weight basis, more specifically at least 5,000 times that of sugar on a per weight basis. The high intensity sweetener can be selected from a wide range of materials, including water-soluble sweeteners, water-soluble artificial sweeteners, water-soluble sweeteners derived from naturally occurring water-soluble sweeteners, dipeptide based sweeteners, and protein based sweeteners. Combinations comprising one or more sweeteners or one or more of the foregoing types of sweeteners can be used. Without being limited to particular sweeteners, representative categories and examples include:
water-soluble sweetening agents such as dihydrochalcones, monellin, steviosides, rebaudiosides, glycyrrhizin, dihydroflavenol, monatin, and L-aminodicarboxylic acid aminoalkenoic acid ester amides, such as those disclosed in U.S. Pat. No. 4,619,834, or a combination thereof;
water-soluble artificial sweeteners such as soluble saccharin salts, i.e., sodium or calcium saccharin salts, cyclamate salts, acesulfame salts, such as the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, or a combination thereof; dipeptide based sweeteners, for example the L-aspartic acid derived sweeteners such as L-aspartyl-L-phenylalanine methyl ester (Aspartame) and materials described in U.S. Pat. No. 3,492,131, L-alpha-aspartyl-N-(2,2,4,4-tetramethyl-3-thietanyl)-D-alaninamide hydrate (Alitame), methyl esters of L-aspartyl-L-phenylglycerine and L-aspartyl-L-2,5-dihydrophenyl-glycine, L-aspartyl-2,5-dihydro-L-phenylalanine; L-aspartyl-L-(1-cyclohexen)-alanine, neotame, or a combination thereof;
water-soluble sweeteners derived from naturally occurring water-soluble sweeteners, such as steviosides and stevia derived compounds such as but not limited to steviol glycosides such as rebaudiocides including rebaudiocide A, and the like, lo han quo and lo han quo derived compounds such as iso-mogroside V and the like, chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-1-deoxy-beta-D-fructo-furanoside, or 4,1'-dichloro-4,1'-dideoxygalactosucrose; 1',6'-dichloro 1',6'-dideoxysucrose; 4-chloro-4-deoxy-alpha-D-galactopyranosyl-1,6-dichloro-1,6-dideoxy-beta-D-fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D- fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galacto-pyranosyl-1,6-dichloro-1,6-dideox y-beta-D-fructofuranoside, or 4,6,1',6'-tetrachloro4,6,1',6'-tetradeoxygalacto-sucrose; 4,6,1',6'-tetradeoxy-sucrose, or a combination thereof;
protein based sweeteners such as thaumaoccous danielli, talin, or a combination thereof; and
amino acid based sweeteners.

Furthermore, the high intensity sweetener can be used in a variety of distinct physical forms, for example those known in the art to provide an initial burst of sweetness and/or a prolonged sensation of sweetness. Without being limited thereto, such physical forms include free forms (e.g., spray dried or powdered), beaded forms, encapsulated forms, or a combination thereof.

The chewing gum composition may comprise a sensate. Exemplary sensates include cooling agents, warming agents, tingling agents, effervescent agents, or a combination thereof. Cooling agents are additives that provide a cooling or refreshing effect in the mouth, in the nasal cavity, or on skin. For example, among the useful cooling agents are included menthane, menthone, ketals, menthone ketals, menthone glycerol ketals, substituted p menthanes, acyclic carboxamides, mono menthyl glutarate, substituted cyclohexanamides, substituted cyclohexane carboxamides, substituted ureas and sulfonamides, substituted menthanols, hydroxymethyl and hydroxymethyl derivatives of p menthane, 2 mercapto cyclo decanone, hydroxycarboxylic acids with 2 6 carbon atoms, cyclohexanamides, menthyl acetate, menthyl salicylate, N,2,3 trimethyl 2 isopropyl butanamide (WS-23), N-ethyl-2,2-diisopropylbutanamide, N ethyl p menthane 3 carboxamide (WS-3), ethyl ester of N-[[5-methyl-2-(1-methylethyl)cyclohexyl]carbonyl]glycine (WS-5), as well as the substantially pure ethyl ester ofN-[[5-methyl-2-(1-methylethyl)cyclohexyl]carbonyl]glycine as disclosed in U.S. Patent No. 7,189,760 to Erman, et al which is incorporated in its entirety herein by reference, isopulegol, menthyloxy propane diol, 3-(1-menthoxy)propane-1,2-diol, 3-(1-menthoxy)-2-methylpropane-1,2-diol, p-menthane-2,3-diol, p-menthane-3,8-diol, 6-isopropyl-9-methyl-1,4-dioxaspiro[4,5]decane-2-methanol, menthyl succinate and its alkaline earth metal salts, trimethylcyclohexanol, N-ethyl-2-isopropyl-5-methylcyclohexanecarboxamide, N-(4-cyanomethylphenyl) p-menthanecarboxamide (G-180), Japanese mint oil, peppermint oil, 3-(1-menthoxy)ethan-1-ol, 3-(1-menthoxy)propan-1-ol, 3-(1-menthoxy)butan-1-ol, 1-menthylacetic acid N-ethylamide, 1-menthyl-4-hydroxypentanoate, 1-menthyl-3-hydroxybutyrate, N,2,3-trimethyl-2-(1-methylethyl)-butanamide, n-ethyl-t-2-c-6 nonadienamide, N,N-dimethyl menthyl succinamide, substituted p-menthanes, substituted p-menthane-carboxamides, 2-isopropanyl-5-methylcyclohexanol (from Hisamitsu Pharmaceuticals, hereinafter "isopregol"); menthone glycerol ketals (FEMA 3807, tradename FRESCOLAT® type MGA); 3-1-menthoxypropane-1,2-diol (from Takasago, FEMA 3784); and menthyl lactate; (from Haarman & Reimer, FEMA 3748, tradename FRESCOLAT® type ML), WS-30, WS-14, Eucalyptus extract (p-Mehtha-3,8-Diol), Menthol (its natural or synthetic derivatives), Menthol PG carbonate, Menthol EG carbonate, Menthol glyceryl ether, N-tertbutyl-p-menthane-3-carboxamide, P-menthane-3-carboxylic acid glycerol ester, Methyl-2-isopryl-bicyclo (2.2.1), Heptane-2-carboxamide; Menthol methyl ether, menthyl pyrrolidone carboxylate; 2,5-dimethyl-4-(1-pyrrolidinyl)-3(2H)-furanone; cyclic α-keto enamines, cyclotene derivatives such as cyclopentenes including 3-methyl-2-(1-pyrrolidinyl)-2-cyclopenten-1-one and 5-methyl-2-(1-pyrrolidinyl)-2-cyclopenten-1-one, compounds of the formula: 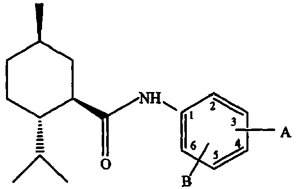 wherein B is selected from H, CH₃, C₂H₅, OCH₃, OC₂H₅; and OH; and wherein A is a moiety of the formula-CO-D, wherein D is selected from the following moieties: (i)-NR¹R², wherein R¹ and R² are independently selected from H and C₁-C₈ straight or branched-chain aliphatic, alkoxyalkyl, hydroxyalkyl, araliphatic and cycloalkyl groups, or R¹ and R² together with the nitrogen atom to which they are attached form part of an optionally-substituted, five-or six-membered heterocyclic ring; (ii)-NHCH₂COOCH₂CH₃,-NHCH₂CONH₂,-NHCH₂CH₂OCH₃,-NHCH₂CH₂OH,-NHCH₂CH(OH)CH₂OH and (iii) a moiety selected from the group consisting of: 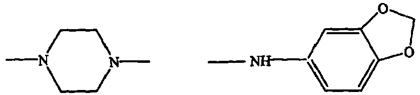 as disclosed in PCT Patent Application WO2006/125334 to Bell et al. which is incorporated in its entirety herein by reference, among others; or a combination thereof. Other compounds include the alpha-keto enamines disclosed in U.S. Patent No. 6,592,884 to Hofmann et al. These and other suitable cooling agents are further described in the following U.S. patents : U.S. 4,230,688; 4,032,661; 4,459,425; 4,178,459; 4,296,255; 4,136,163; 5,009,893; 5,266,592; 5,698,181; 6,277,385; 6,627,233; 7,030,273. Still other suitable cooling agents are further described in the following U.S. Published Patent Applications, U.S. 2005/0222256; 2005/0265930.

Warming agents can be selected from a wide variety of compounds known to provide the sensory signal of warming to the user. These compounds offer the perceived sensation of warmth, particularly in the oral cavity, and often enhance the perception of flavors, sweeteners and other organoleptic components. Among the useful warming agents included are vanillyl alcohol n-butylether (TK-1000) supplied by Takasago Perfumary Company Limited, Tokyo, Japan, vanillyl alcohol n-propylether, vanillyl alcohol isopropylether, vanillyl alcohol isobutylether, vanillyl alcohol n-aminoether, vanillyl alcohol isoamylether, vanillyl alcohol n-hexylether, vanillyl alcohol methylether, vanillyl alcohol ethylether, gingerol, shogaol, paradol, zingerone, capsaicin, dihydrocapsaicin, nordihydrocapsaicin, homocapsaicin, homodihydrocapsaicin, ethanol, isopropol alcohol, iso-amylalcohol, benzyl alcohol, or a combination thereof.

In an embodiment, tingling agents may be employed to provide a tingling, stinging or numbing sensation to the user. Tingling agents include, but are not limited to: Jambu Oleoresin or para cress (Spilanthes sp.), in which the active ingredient is Spilanthol; Japanese pepper extract (Zanthoxylum peperitum), including the ingredients known as Saanshool-I, Saanshool-II and Sanshoamide; perillartine; 4-(1-menthoxymethyl)-2-phenyl-1,3-dioxolane; black pepper extract (piper nigrum), including the active ingredients chavicine and piperine; Echinacea extract; Northern Prickly Ash extract; trans-pellitorin, and red pepper oleoresin; or a combination thereof. In an embodiment, alkylamides extracted from materials such as jambu or sanshool may be included. Additionally, in an embodiment, a sensation is created due to effervescence. Such effervescence is created by combining an alkaline material with an acidic material, either or both of which may be encapsulated. In an embodiment, an alkaline material may include alkali metal carbonates, alkali metal bicarbonates, alkaline earth metal carbonates, alkaline earth metal bicarbonates or a combination thereof. In an embodiment, an acidic material may include acetic acid, adipic acid, ascorbic acid, butyric acid, citric acid, formic acid, fumaric acid, glyconic acid, lactic acid, phosphoric acid, malic acid, oxalic acid, succinic acid, tartaric acid or a combination thereof. Examples of "tingling" type sensates include those disclosed in U.S. Patent Nos. 6,780,443, 6,159,509, 5,545,424, and 5,407,665.

The chewing gum composition may optionally further comprise a flavor modulator or potentiator. A sweet taste can come from flavor modulators or potentiators and/or from flavorants as well as from sweeteners. Flavor potentiators can consist of materials that intensify, supplement, modify or enhance the taste or aroma perception of an original material without introducing a characteristic taste or aroma perception of their own. Flavor modulators can impart a characteristic of their own that complements or negates a characteristic of another component. In an embodiment, flavor modulators or potentiators are designed to intensify, supplement, modify, or enhance the perception of flavor, sweetness, tartness, umami, kokumi, saltiness or a combination thereof can be included. Thus, the addition of flavor modulators or potentiators can impact the overall taste of the chewing gum. For example, flavors can be compounded to have additional sweet notes by the inclusion of flavor modulators or potentiators, such as vanilla, vanillin, ethyl maltol, furfual, ethyl propionate, lactones, or a combination thereof.

Exemplary flavor modulators or potentiators include monoammonium glycyrrhizinate, licorice glycyrrhizinates, citrus aurantium, alapyridaine, alapyridaine (N-(1-carboxyethyl)-6-(hydroxymethyl)pyridinium-3-ol) inner salt, miraculin, curculin, strogin, mabinlin, gymnemic acid, cynarin, glupyridaine, pyridinium-betain compounds, neotame, thaumatin, neohesperidin dihydrochalcone, tagatose, trehalose, maltol, ethyl maltol, vanilla extract, vanilla oleoresin, vanillin, sugar beet extract (alcoholic extract), sugarcane leaf essence (alcoholic extract), compounds that respond to G-protein coupled receptors (T2Rs and T1Rs), or a combination thereof. In an embodiment, sugar acids, sodium chloride, potassium chloride, sodium acid sulfate, or a combination thereof are used. In an embodiment, glutamates such as monosodium glutamate, monopotassium glutamate, hydrolyzed vegetable protein, hydrolyzed animal protein, yeast extract, or a combination thereof are included. Further examples include adenosine monophosphate (AMP), glutathione, and nucleotides such as inosine monophosphate, disodium inosinate, xanthosine monophosphate, guanylate monophosphate, or a combination thereof. Further examples of flavor potentiator compositions that impart kokumi are also included in U.S. Patent No. 5,679,397 to Kuroda et al.

The amount of flavor modulators, flavor potentiators, and flavorants used herein can be a matter of preference subject to such factors as the type of final product composition, the individual flavor, and the strength of flavor desired. Thus, the amount of flavoring can be varied in order to obtain the result desired in the final product and such variations are within the capabilities of those skilled in the art without the need for undue experimentation.

Exemplary functional ingredients for optional use in the chewing gum composition include a breath freshener, a dental care component, an active agent, an herbal, an effervescing system, an appetite suppressor, a vitamin, a micronutrient, a mouth moistening component, a throat care component, an energy boosting agent, a concentration boosting agent, or a combination thereof.

The chewing gum composition may optionally further comprise a coloring agent. Coloring agents (colors, colorants, colorings) can be used in amounts effective to produce a desired color for the chewing gum Suitable coloring agents include pigments, which can be incorporated in amounts up to about 6 wt% based on the total weight of the chewing gum. For example, titanium dioxide can be incorporated in amounts up to about 2 wt%, and specifically less than about 1 wt% based on the total weight of the chewing gum. Suitable coloring agents also include natural food colors and dyes suitable for food, drug, and cosmetic applications. Suitable colors include annatto extract (E160b), bixin, norbixin, astaxanthin, dehydrated beets (beet powder), beetroot red/betanin (E162), ultramarine blue, canthaxanthin (E161g), cryptoxanthin (E161c), rubixanthin (E161d), violanxanthin (E161e), rhodoxanthin (E161f), caramel (E150(a-d)), β-apo-8'-carotenal (E160e), β-carotene (E160a), alpha carotene, gamma carotene, ethyl ester of beta-apo-8 carotenal (E160f), flavoxanthin (E161a), lutein (E161b), cochineal extract (E120), carmine (E132), carmoisine/azorubine (E122), sodium copper chlorophyllin (E141), chlorophyll (E140), toasted partially defatted cooked cottonseed flour, ferrous gluconate, ferrous lactate, grape color extract, grape skin extract (enocianina), anthocyanins (E163), haematococcus algae meal, synthetic iron oxide, iron oxides and hydroxides (E172), fruit juice, vegetable juice, dried algae meal, tagetes (Aztec marigold) meal and extract, carrot oil, corn endosperm oil, paprika, paprika oleoresin, phaffia yeast, riboflavin (E101), saffron, titanium dioxide, turmeric (E100), turmeric oleoresin, amaranth (E123), capsanthin/capsorbin (E160c), lycopene (E160d), FD&C blue #1, FD&C blue #2, FD&C green #3, FD&C red #3, FD&C red #40, FD&C yellow #5 and FD&C yellow #6, tartrazine (E102), quinoline yellow (E104), sunset yellow (E110), ponceau (E124), erythrosine (E127), patent blue V (E131), titanium dioxide (E171), aluminium (E173), silver (E174), gold (E175), pigment rubine/lithol rubine BK (E180), calcium carbonate (E170), carbon black (E153), black PN/brilliant black BN (E151), green S/acid brilliant green BS (E142), or a combination thereof. In an embodiment, certified colors can include FD&C aluminum lakes, or a combination thereof. A full recitation of all FD& C colorants and their corresponding chemical structures may be found in the Kirk-Othmer Encyclopedia of Chemical Technology, 4th Edition, in volume 1 at pages 492-494.

Coloring agents can also include food grade glitter which can be incorporated into the chewing gum composition. The edible glitter can include a food grade colorant and a carrier such as a sugar, a sugar alcohol, a disaccharide, a polysaccharide, a hydrocolloid material, or a combination thereof. Exemplary glitter includes the commercially available Edible GlitterTM from Watson Inc. of West Haven, CT.

The coloring agent can include food grade pearlescent pigments prepared from mica optionally coated with titanium dioxide, iron oxide, and the like.

The chewing gum composition may optionally further comprise a hydrocolloid. Hydrocolloid materials can include naturally occurring materials such as plant exudates, seed gums, and seaweed extracts or they can be chemically modified materials such as cellulose, starch, or natural gum derivatives. Furthermore, hydrocolloid materials can include pectin, gum arabic, acacia gum, alginates, agar, carageenans, guar gum, xanthan gum, locust bean gum, gelatin, gellan gum, galactomannans, tragacanth gum, karaya gum, curdlan, konjac, chitosan, xyloglucan, beta glucan, furcellaran, gum ghatti, tamarin, and bacterial gums. Modified natural gums include propylene glycol alginate, carboxymethyl locust bean gum, low methoxyl pectin, or a combination thereof. Modified celluloses can be included such as microcrystalline cellulose, carboxymethlcellulose (CMC), methylcellulose (MC), hydroxypropylmethylcellulose (HPCM), hydroxypropylcellulose (MPC), or a combination thereof.

The chewing gum composition may optionally further comprise a humectant. Exemplary humectants include glycerin, propylene glycol, polyethylene glycol, or a combination thereof. The amount of humectant can be controlled to ensure the final chewing gum product does not unduly absorb moisture from the surrounding environment during production, packaging, storage, and use.

In one embodiment, the elongated chewing gum pellet comprises less than 10 wt% humectant to 0 wt%, specifically less than 7 wt%, and more specifically less than 4 wt% based on the total weight of the elongated chewing gum pellet. Gum base

The chewing gum comprises a chewing gum base. In an embodiment, the chewing gum comprises a gum base comprising an elastomer and optionally an additional gum base ingredient, wherein the additional gum base ingredient is a resin, a fat, an emulsifier, a wax, a filler, a softener, a plasticizer, an antioxidant, or a combination thereof.

As used herein, the term "gum base" refers to water insoluble material(s) and can include, but is not limited to, elastomers, resins, waxes, elastomer solvents, emulsifiers, plasticizers, bulking agents/fillers, or a combination thereof.

The amount of gum base employed will vary greatly depending upon various factors such as the type of base used, the consistency of the chewing gum desired, and the other components used in the composition to make the final chewing gum In general, the gum base will be present in amounts of 5 to 60 wt% based on the total weight of the chewing gum composition, specifically 25 to 50 wt%, more specifically 30 to 45 wt%, and yet more specifically 35 to 40 wt%. The use of greater amounts of gum base in the chewing gum composition results in a less hygroscopic chewing gum formulation as the quantity of hygroscopic ingredients is reduced.

Exemplary elastomers to be used in the chewing gum base include both natural and synthetic elastomers and rubbers, for example, substances of vegetable origin such as chicle, crown gum, nispero, rosadinha, jelutong, perillo, niger gutta, tunu, balata, gutta-percha, lechi-capsi, sorva, gutta kay, and the like, or a combination thereof. Synthetic elastomers such as butadiene-styrene copolymers, polyisobutylene, isobutyleneisoprene copolymers, polyethylene, a combination thereof, and the like, or a combination thereof are also useful. The gum base can include a non-toxic vinyl polymer, such as polyvinyl acetate and its partial hydrolysate, polyvinyl alcohol, or a combination thereof. When utilized, the molecular weight of the vinyl polymer can range from 3,000 up to and including 94,000. Additional useful polymers include: crosslinked polyvinyl pyrrolidone, polymethylmethacrylate; copolymers of lactic acid, polyhydroxyalkanoates, plasticized ethylcellulose, polyvinyl acetatephthalate, or a combination thereof.

Conventional additives can be included in the gum base in effective amounts such as plasticizers or softeners to provide a variety of desirable textures and consistency properties. Because of the low molecular weight of these components, the plasticizers and softeners are able to penetrate the fundamental structure of the gum base making it plastic and less viscous. Suitable plasticizers and softeners include lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerin, or a combination thereof. Some of these ingredients may be added at the time of gum base formation or added later during the production of the chewing gum composition.

Waxes, for example, natural and synthetic waxes, hydrogenated vegetable oils, petroleum waxes such as polyurethane waxes, polyethylene waxes, paraffin waxes, microcrystalline waxes, fatty waxes, sorbitan monostearate, tallow, propylene glycol, and the like, or a combination thereof, can also be incorporated into the gum base to obtain a variety of desirable textures and consistency properties.

When a wax is present in the gum base, it softens the polymeric elastomer mixture and improves the elasticity of the gum base. The waxes employed may have a melting point below about 60° C, and specifically between about 45° C and about 55° C. The low melting wax can be a paraffin wax. The wax can be present in the gum base in an amount of about 0.1 to about 10 wt%, and specifically about 3 to about 7 wt% based on the total weight of the gum base.

In addition to the low melting point waxes, waxes having a higher melting point can be used in the gum base in amounts up to about 5 wt% based on the total weight of the gum base. Such high melting waxes include beeswax, vegetable wax, candelilla wax, carnuba wax, most petroleum waxes, and the like, or a combination thereof.

The chewing gum or gum base can optionally contain conventional elastomer solvents to aid in softening the elastomer base component, for example trepanned resins such as polymers of alpha-pinene or beta-pinene; methyl, glycerol or pentaerythritol esters of rosins or modified rosins and gums, such as hydrogenated, dimerized or polymerized rosins, or a combination thereof; the pentaerythritol ester of partially hydrogenated wood or gum rosin; the pentaerythritol ester of wood or gum rosin; the glycerol ester of wood rosin; the glycerol ester of partially dimerized wood or gum rosin; the glycerol ester of polymerized wood or gum rosin; the glycerol ester of tall oil rosin; the glycerol ester of wood or gum rosin; the partially hydrogenated wood or gum rosin; the partially hydrogenated methyl ester of wood or rosin; and the like; or a combination thereof. The elastomer solvent can be used in amounts of about 5 to about 75 wt% base on the total weight of the gum base, and specifically about 45 to about 70 wt%.

The gum base can include effective amounts of bulking agents such as mineral adjuvants, which can serve as fillers and textural agents. Suitable mineral adjuvants include calcium carbonate, magnesium carbonate, alumina, aluminum hydroxide, aluminum silicate, talc, tricalcium phosphate, tricalcium phosphate and the like, or a combination thereof. These fillers or adjuvants can be used in the gum base in various amounts. Specifically the amount of filler, when used, can be present in an amount of greater than about 0 to about 60 wt% based on the total weight of the gum base, and more specifically from about 20 to about 30 wt%.

Suitable emulsifiers for use in the gum base include distilled monoglycerides, acetic acid esters of mono and diglycerides, citric acid esters of mono and diglycerides, lactic acid esters of mono and diglycerides, mono and diglycerides, polyglycerol esters of fatty acids, ceteareth-20, polyglycerol polyricinoleate, propylene glycol esters of fatty acids, polyglyceryl laurate, glyceryl cocoate, gum arabic, acacia gum, sorbitan monostearates, sorbitan tristearates, sorbitan monolaurate, sorbitan monooleate, sodium stearoyl lactylates, calcium stearoyl lactylates, diacetyl tartaric acid esters of mono- and diglycerides, glyceryl tricaprylate-caprate / medium chain triglycerides, glyceryl dioleate, glyceryl oleate, glyceryl lacto esters of fatty acids, glyceryl lacto palmitate, glyceryl stearate, glyceryl laurate, glycerly dilaurate, glyceryl monoricinoleate, triglyceryl monostearate, hexaglyceryl distearate, decaglyceryl monostearate, decaglyceryl dipalmitate, decaglyceryl monooleate, polyglyceryl 10 hexaoleate, medium chain triglycerides, caprylic/capric triglyceride, propylene glycol monostearate, polysorbate 20, polysorbate 40, polysorbate 60, polysorbate 80, polysorbate 65, hexylglyceryl distearate, triglyceryl monostearate, tweens, spans, stearoyl lactylates, calcium stearoyl-2-lactylate, sodium stearoyl-2-lactylate lecithin, ammonium phosphatide, sucrose esters of fatty acids, sucroglycerides, propane-1,2-diol esters of fatty acids, or a combination thereof.

### Methods of making the chewing gum composition

The chewing gum composition can be prepared using standard techniques and equipment known in the art.

In one exemplary process, a gum base is heated to a temperature sufficiently high to soften the gum base without adversely affecting the physical and chemical make up of the gum base, which will vary depending upon the composition of the gum base used, and is readily determined by those skilled in the art without undue experimentation. For example, the gum base can be conventionally melted to 60°C to 160°C, or melted to 150°C to 175°C, for a period of time sufficient to render the base molten, e.g., about thirty minutes, just prior to being admixed incrementally with the remaining ingredients of the gum base such as the plasticizer, fillers, and softener to plasticize the blend as well as to modulate the hardness, viscoelasticity and formability of the base. The chewing gum ingredients are next blended with the molten gum base. Mixing is continued until a uniform or homogeneous mixture of the chewing gum composition is obtained. Thereafter the chewing gum composition can be formed into the elongated chewing gum pellet shape.

In another exemplary process, chewing gum ingredients are mixed with gum base without prior melting of the gum base or gum base ingredients. Mixing is continued until a uniform or homogeneous mixture of the chewing gum composition is obtained. Thereafter the chewing gum composition can be formed into the elongated chewing gum pellet shape. Within this embodiment, the gum base can be in the form of a pelletized gum base that can be softened at 40 to 50°C rather than melting at higher temperatures as in the prior embodiment.

In another embodiment, a combination of melted gum base and pelletized gum base can be used.

The chewing gum composition can be prepared using a batch method or a continuous method or a combination thereof.

The processing equipment used to prepare the chewing gum composition can be monitored and/or controlled automatically. For example, the processing equipment can be coupled to a computerized system which allows the user to input certain and/or all of the operational parameters, including, e.g., feeding of the ingredients, mixing or processing the ingredients, conveying the ingredients. In an embodiment, the system can be coupled to batch processing equipment, continuous processing equipment, or both if both types are used. In an embodiment, changing the input parameters used to control the processing can create changes in the final composition, e.g., ingredient amount and type, etc. For example, the ingredient and/or processing temperatures and/or feed rates of the ingredients can be monitored and fed back to a central unit so that the operator can adjust as needed and/or in which the system can automatically adjust. After the ingredients have been mixed, the formation, processing into a particular shape and/or form can also be monitored and fed back for the operators input and/or automatic adjustment. An audible and/or visual alarm can also be implemented to signal the operator when the system detects a problem and/or a variation in one or more processing parameters.

The chewing gum composition can be formed using a variety of processes including an extrusion process, a coextrusion process, a triple extrusion process, a laminate process, a molding process, a compression process, a rolling and scoring process, a chain die process, or a rotary die process.

The chewing gum composition can be shaped using devices and techniques that are known in the confectionery art. For example, the chewing gum composition can be shaped by hand, with molds and/or dies, cutters, pullers, stretchers, extruders and the like. Non-limiting examples of molds that can be used include, flexible (e.g., made of silicone), metal, plastic, glass, and the like. Combinations of these may also be employed.

The chewing gum composition can be prepared into discrete units in general elongated chewing gum pellet shape as discussed above. The formation into discrete units can be achieved using a chain die, rolling and scoring process, or other known process.

The elongated chewing gum pellet pieces can be packaged as a plurality of units free of piece wrap in a re-closable container. The container can be a carton, a bottle, a bag, or a similar structure made from plastic, cardboard, paper, metal, foil, or a combination thereof.

In one embodiment, a packaged product comprises a plurality of the elongated chewing gum pellets wherein the package has indicia on an outer surface that is indicative of the product contained in the package.

In one embodiment, a packaged plurality of chewing gum comprises a container; and
a plurality of elongated chewing gum pellets housed within the container, the elongated chewing gum pellets having a curvilinear shaped surface, and consisting essentially of a dusting composition on the surface of each elongated chewing gum pellet; wherein each elongated chewing gum pellet is free of piece wrap and free of a coating; and wherein the dusting composition comprises mannitol. The elongated chewing gum pellet does not contain an outer shell.

The features and advantages are more fully shown by the following examples which are provided for purposes of illustration, and are not to be construed as limiting the invention in any way.

### EXAMPLES

### Example 1. Dusting compositions, Dynamic Vapor Sorption analysis

A Dynamic Vapor Sorption (DVS) measurement study was conducted on nine dusting compositions as set out in Table. 1.

**Table. 1**

| Dusting Composition |
|---|
| Roquette Mannitol |
| Cargill Mannitol |
| 90/10 Talc/Roquette Mannitol |
| 90/10 Talc/Cargill Mannitol |
| 90/10 Limestone/Roquette Mannitol |
| 225 Grade 100% Talc |
| 500 Grade 100% Talc |
| Laboratory grade Talc |
| 700 Grade 100% Talc |

The results indicate that none of the dusting compositions tested was hygroscopic up to 90 % humidity; thus the moisture uptake for all samples is extremely low. Of the samples, 700 Grade 100% talc picked up moisture the fastest and is the most hygroscopic of all the nine powders. The two least hygroscopic samples were the Roquette mannitol powder and the mixture 90/10 limestone/Roquette mannitol.

### Example. 2

A stability study was conducted on a fruit flavored sugar-free chewing gum prepared into different shapes, dusted with select dusting compositions, and packaged in plastic containers as loose, unwrapped and uncoated units. The study was designed to mimic the conditions a consumer would place on the packaged product after opening and upon daily opening of the package and removal of chewing gum units. The method uses 'cycling' of the product to account for six-hour high temperature and high humidity conditions (day time) and eighteen-hour low temperature and lower humidity conditions (night time). Stability is tested through standard sensory evaluation chews by comparing these samples with a reference sample. The study assessed how the dusting composition and chewing gum piece shape affected product stability, particularly the likelihood of individual pieces to stick to one another in the container.

The Fruit flavored chewing gum formulation used in the study is found in Table 2.

**Table 2. Fruit flavored chewing gum**

| Ingredient | wt% based on the total chewing gum composition without dusting composition |
|---|---|
| Gum base | 28.7 |
| Sugar polyol (sorbitol, xylitol, mannitol) | 55.3 |
| Glycerin | 7.0 |
| Fruit flavor | 3.7 |
| Cooling compounds | 0.1 |
| Citric/malic acid | 1.5 |
| Color | 0.3 |
| High intensity sweetener | 3.4 |
| Total | 100 |

The chewing gum was prepared by melting the gum base using techniques known in the art. The sugar polyol bulk sweetener and glycerin are added with mixing. The flavor, cooling compounds, color, and food acid are added with mixing followed by the addition of high intensity sweeteners to form a Fruit flavored chewing gum composition. The chewing gum composition is formed into pieces having one of two shapes, either a flat slab shape or elongated pellet shape, and the pieces are dusted with a variety of dusting compositions as set out in Table 3.

The elongated pellet ("EP") shape had the dimensions 26.4 mm length, 12.4 mm width, and 5.5 mm thickness, and an overall curvilinear shape to the largest two faces of the pellet. The flat slab format had the dimensions about 31 mm length, about 12 mm width, and about 4 mm thickness, and an overall flat surface.

Thirty-five samples of each shape and dusting composition combination as set out in Table 3 were individually placed in a 25°C/60% Relative Humidity environment and packed in a plastic bottle and sealed with a plastic overwrap. Ten bottles of each shape/dusting combination were prepared, one for each day of the study. The bottles were subjected to a daily rotation from a 25°C/60% Relative Humidity environment for eighteen hours into a 37°C/80% Relative Humidity conditioning room for six hours. Every day of the study a single bottle of each shape/dusting combination was removed for analysis.

The content of the bottles was analyzed to determine how many pieces stuck together (> 7 = failure) and samples were chewed to analyze changes in a variety of sensory attributes. After each cycle the samples were tested for Dewing, Usage, Sticking, and Sensory Attributes. The results of the study are provided in Table. 3, which shows the overall score based on an average rating of the attributes recorded by five people: Appearance, Surface Treatment Texture, Sweating, Odor, Flavor, Sourness, and Texture. Each sample was ranked in comparison to a frozen sample of the same type. Ratings were based on a 5 point scale where 1 is identical to the control, 3 is a noticeable deviation from the control, and 5 is unacceptable deviation from the control. Failures = individual attributes with ratings greater than or equal to 3 on a five point scale.

As a comparison example, Ice Breakers® a cube-shaped chewing gum product having a xylitol sanding coating, was also tested. The results of the study are provided in Table. 3.

**Table. 3**

| Product (dusting composition, shape) | Day 1 | Day 2 | Day 3 | Day 4 | Day 5 | Day 6 | Day 7 | Day 8 | Day 9 | Day 10 | Comments |
|---|---|---|---|---|---|---|---|---|---|---|---|
| Cargill Mannitol (Flat Slab) | 1.31 | 1.33 | 1.33 | 1.50 | 1.31 | 1.33 | 1.50 | 1.50 | 1.67 | 2.33 | Day 7: 35/35 pieces stuck |
| Roquette Mannitol (Flat Slab) | 1.25 | 1.25 | 1.25 | 1.50 | 1.50 | 1.50 | 1.50 | 1.75 | 1.90 | 2.08 | Day 4: 16/35 pieces stuck; Day 6: 35/35 |
| Talc+Cargill Mannitol 90/10 (Flat Slab) | 1.35 | 1.17 | 1.33 | 1.56 | 1.44 | 1.50 | 1.50 | 1.63 | 1.75 | 2.00 | Day 2: 13/35 pieces stuck; Day 4,5: 26/35 |
| Talc+Roquett e Mannitol 90/10 (Flat Slab) | 1.10 | 1.33 | 1.17 | 1.44 | 1.63 | 1.50 | 1.88 | 1.75 | 2.00 | 2.42 | Day 2: 16/35 pieces stuck; Day 4: 26/35; Day 5: 34/35 |
| Cargill Mannitol (EP) | 1.20 | 1.17 | 1.25 | 1.36 | 1.50 | 1.75 | 1.67 | 1.75 | 1.88 | 1.83 | Day 6: 28/35 pieces stuck |
| Roquette Mannitol (EP) | 1.20 | 1.25 | 1.08 | 1.38 | 1.36 | 1.83 | 1.75 | 1.75 | 1.75 | 1.83 | Day 6: 28/35 pieces stuck; Day 10: 10/35 |
| Talc+Cargill Mannitol 90/10 (EP) | 1.40 | 1.23 | 1.42 | 1.75 | 1.69 | 1.92 | 1.67 | 2.00 | 1.75 | 2.17 | Day 4: 33/35 pieces stuck; Day 5: 30/35 |
| Talc+Roquett e Mannitol 90/10 (EP) | 1.45 | 1.07 | 1.25 | 1.63 | 1.44 | 1.58 | 1.50 | 1.75 | 1.83 | 1.75 | Day 4: 33/35 pieces stuck; Day 5: 31/35 |
| Ice Breakers® | 1.25 | 1.50 | 1.50 | 1.56 | 1.50 | 1.25 | 1.63 | 1.63 | 2.50 | 2.25 | Day 3: 16/40 pieces stuck |

The data shows the use of mannitol dusting composition had significantly less fails than the talc/mannitol dusting composition. The data also shows a trend that the elongated pellet shape provided a more stable product when bulk packaged than the flat slab format. It is noted that the amount of dusting composition used in the study was not regulated and the observed dusting on the samples was uneven. It was believed that the stability of the samples could be improved by ensuring the homogeneity of the dusting composition content on the chewing gum pieces. Therefore, the study in Example 3 was conducted.

### Example 3

A stability study was conducted on the fruit flavored sugar-free chewing gum of Example 2 and a Spearmint flavored chewing gum, each prepared into flat slab and elongated pellet shapes, dusted with select dusting compositions and additional surface treatments set out in Table 5, and packaged in plastic containers as loose, unwrapped and uncoated units. The study was designed to mimic the conditions a consumer would place on the packaged product after opening and upon daily opening of the package and removal of chewing gum units. The study assessed how the dusting composition and chewing gum piece shape affected product stability, particularly the likelihood of individual pieces to stick to one another in the container. The samples were coated with various dusting compositions at a regulated amount (use of 2.42% dusting composition with approximately 1% retained on the samples was observed). Additional samples having a sanding and wax coating were also added as comparisons. The sanded product was coated with a coating solution followed by the application of powdered mannitol. The sanded and waxed samples contained the same sanding coating as mentioned previously followed by a conditioning step and then a wax coating.

The Spearmint flavored chewing gum formulation is found in Table 4.

**Table 4. Spearmint flavored chewing gum**

| Ingredient | wt% based on total chewing gum composition without dusting composition |
|---|---|
| Gum base | 28.85 |
| Sugar polyol (Sorbitol, xylitol, mannitol) | 56.1 |
| Glycerin | 7.25 |
| Spearmint/mint flavors | 3.25 |
| Cooling compounds | 0.43 |
| Color | 0.1 |
| High intensity sweetener | 3.94 |
| Total | 100 |

The chewing gum was prepared by melting the gum base using techniques known in the art. The sugar polyol bulk sweetener and glycerin are added with mixing. The flavor, cooling compounds and color are added with mixing followed by the addition of high intensity sweeteners to form a Spearmint flavored chewing gum composition. The chewing gum composition is formed into pieces having either a flat slab or elongated shape and dusted with one of the dusting compositions set out in Table 5.

The elongated pellet shape for the Spearmint samples had the same dimensions as the elongated pellet Fruit samples of Example 2. The flat slab Spearmint had the dimensions of about 43 mm length, about 11.8 width, and about 3.2 thickness, and having an overall flat shape.

Thirty-five samples of each shape and dusting composition combination as set out in Table 5 were individually placed in a 25°C/60% Relative Humidity environment and packed in a plastic bottle and sealed with a plastic overwrap. The bottles were subjected to a daily rotation from the 25°C/60% Relative Humidity environment into a 37°C/80% Relative Humidity conditioning room for six hours. Every day for ten days the content of the bottles was analyzed to determine how many pieces stuck (> 7 = failure) and samples were chewed to analyze changes in sensory attributes (if scores > 3 = failure). Actual usage conditions were also mimicked by removing two pellets from each bottle (35 pieces) for every day of the study to understand how this depletion affects stability. As a comparison, Ice Breakers®, a cube chewing gum product having a xylitol sanding coating was also tested. The results of the study are provided in Table. 5.

**Table. 5.**

| Product | Day 1 | Day 2 | Day 3 | Day 4 | Day 5 | Day 6 | Day 7 | Day 8 | Day 9 | Day 10 | Comments |
|---|---|---|---|---|---|---|---|---|---|---|---|
| Fruit (Flat Slab) (piece wrapped) | 1.13 | 1.13 | 1.17 | 1.25 | 1.50 | 1.25 | 1.33 | 1.38 | 1.92 | 2.17 | |
| Fruit Cargill Mannitol (EP) | 1.06 | 1.06 | 1.17 | 1.42 | 1.63 | 1.83 | 2.17 | 1.63 | 2.33 | 2.42 | No pieces stuck |
| Fruit Roquette Mannitol (EP) | 1.13 | 1.19 | 1.00 | 1.42 | 1.31 | 1.75 | 2.50 | 1.94 | 2.25 | 2.00 | No pieces stuck |
| Fruit Sanded +Waxed (EP) | 1.31 | 1.25 | 1.42 | 1.67 | 2.13 | 1.67 | 2.25 | 2.13 | 2.00 | 2.00 | Day 1: 9/35 pieces stuck |
| Spearmint (Flat Slab) (piece wrapped) | 1.50 | 1.81 | 1.75 | 1.83 | 1.92 | 2.42 | 2.58 | 2.63 | 2.83 | *3.00* | Day 7: Texture 3.33 |
| Spearmint Cargill Mannitol (EP) | 1.50 | 1.50 | 1.25 | 1.58 | 1.88 | 1.58 | 2.08 | 1.94 | 2.50 | 2.08 | Day 9: Texture 3.17 No pieces stuck |
| Spearmint Roquette Mannitol (EP) | 1.00 | 1.25 | 1.08 | 1.83 | 1.81 | 1.42 | 2.33 | 1.88 | 2.67 | 2.00 | Day 7: Texture 3.17 No pieces stuck |
| Spearmint Sanded +Waxed (EP) | 1.38 | 1.38 | 1.33 | 2.00 | 2.13 | 1.83 | 2.58 | 1.75 | 2.17 | 2.42 | Day 1: 35/35 pieces stuck |
| Ice Breakers® | 1.00 | 1.13 | 1.25 | 1.17 | 1.31 | 2.00 | 2.67 | 2.00 | 2.33 | 2.67 | Day 6: 15/40 pieces stuck |

The data shows both the Fruit and the Spearmint elongated pellet did not stick for any of the days. In this study, the flavor type did not impact product stability. The Fruit flavored gum sample represented chewing gum with a high food acid level and Spearmint flavored gum sample represented mint gums. The source of mannitol also does not appear to significantly impact stability of the product. The amount of dusting composition at about 1% did not affect the chew texture of the gum

### Example. 4

A stability study was conducted using the Trident Layers Strawberry Citrus formulation (two outer layers of chewing gum sandwiching a center layer of candy) in two format shapes (flat slab and elongated pellet) coated with mannitol dusting composition (1%), a sanding treatment, or sanding and wax treatment. The currently marketed Trident Layers Strawberry Citrus formulation was used as a control sample.

The elongated pellet shape had dimensions as described in Example 2.

Thirty samples of each shape and surface treatment as set out in Table 6 were individually packed in a plastic bottle and conditioned for cycles of 6 hours at 37°C and 80% Relative Humidity followed by 18 hours in a room temperature chamber 25°C/60% Relative Humidity for 10 days. After each cycle the samples were tested for sticking and sensory aAttributes. The results of the study are provided in Table. 6, which shows the overall score based on an average rating of the attributes recorded by no less than 4 people: Appearance, Coating Texture, Sweating, Odor, Flavor, Sourness, and Texture (the Slab Control, Slab Dusted, and Elongated Pellet do not have coatings). Each sample was ranked in comparison to a frozen sample of the same type. Ratings were based on a 5 point scale where 1 is identical to the control, 3 is a noticeable deviation from the control, and 5 is unacceptable deviation from the control. Failures = >7/30 pieces stuck and individual attributes with ratings greater than or equal to 3 on a five point scale.

**Table. 6.**

| Product | Day 1 | Day 2 | Day 3 | Day 4 | Day 5 | Day 6 | Day 7 | Day 8 | Day 9 | Day 10 |
|---|---|---|---|---|---|---|---|---|---|---|
| Flat Slab (Control) | 1.31 | 1.56 | 1.45 | 2.00 | 2.42 | 1.63 | 2.00 | 2.38 Fail | 2.19 | 2.06 |
| Flat Slab Dusted | 1.63 | 1.38 | 1.74 | 1.40 | 2.13 | **1.63** | 1.63 | **1.63** | **1.63** | **1.81** |
| EP Dusted | 1.13 | 1.20 | 1.20 | 1.25 | 1.63 | 1.38 | 1.69 | **1.69** | 1.50 | 1.69 |
| Flat Slab Sanded | 1.19 | 1.25 | 1.35 | 1.65 | 1.56 | **1.69** | 1.75 | 1.88 | **1.88** | **1.63** |
| EP Sanded | 1.19 | 1.20 | 1.35 | 1.45 | 1.63 | **1.69** | **1.81** | 1.61 | **1.63** | **1.81** |
| Flat Slab Sanded and Waxed | 1.31 | 1.20 | 1.55 | 1.80 | 1.69 | 1.38 | 2.31 | **1.94** | **1.69** | **1.81** |
| EP Sanded and Waxed | 1.13 | 1.20 | 1.45 | 1.60 | 1.81 | 1.63 | **1.56** | 1.44 | **1.69** | 1.50 |

| | | | | | | | | | | |
|---|---|---|---|---|---|---|---|---|---|---|
| *Those samples that stuck together before the shake procedure are underlined while those samples that stuck together both before and after the shake procedure are in bold. | | | | | | | | | | |

The data showed an increasing trend in sourness, texture softening, and stickiness was observed across all samples. The dusted flat slab product center layer began to leak out of the piece more after each cycle. The flat slab dusted and sanded + waxed samples also resulted in more sweating, appearing as wet spots on the top and bottom of the sample. The only noted attribute failure was that of the Flat Slab control's appearance on Day 8 being wet. After 5 cycles of conditioning the samples, a majority of the samples failed the Stick test. Therefore, to more accurately analyze the results, a shaking procedure was added. Determining the number of pieces stuck without the shaking procedure involved turning the bottle over and counting the pieces remaining in the container to result in the number of stuck pieces. The shaking procedure involved turning the bottle over and vigorously shaking the bottle to mimic consumer use and then counting the number of pieces remaining in the container.

As seen in prior Examples, the shape of the samples had an effect on the piece sticking. The elongated pellets performed better on average on all days than the flat slab format when the shaking procedure was not used. It was observed that the elongated pellet performed very similarly or better after the shaking procedure was used.

Of the surface treatments studied, dusting performed the best overall and the sanded and sanded+waxed performed similar to each other without the shaking procedure.

A usage test was conducted to mimic the effects of daily product use. Each day the contents of each bottle were emptied to determine the amount of samples that stuck to each other. Samples started at 30 pieces and 2 pieces were removed each day until day 10. Failures were based on greater than 23.3% of the remaining samples, where 23.3% comes from the original value of 7/30 being the failure rate. The amount of pieces stuck during the usage test is provided in Table 7. The values highlighted in bold and underlined indicate greater than 23.3% of the remaining samples being stuck. Dusted EP, Sanded EP, and Sanded+Waxed EP all performed without failure, while one sample from each type of surface treatment failed.

**Table. 7.**

| | Day 1 | Day 2 | Day 3 | Day 4 | Day 5 | Day 6 | Day 7 | Day 8 | Day 9 | Day 10 |
|---|---|---|---|---|---|---|---|---|---|---|
| Pieces remaining | 30 | 28 | 26 | 24 | 22 | 20 | 18 | 16 | 14 | 12 |
| Product | | | | | | | | | | |
| Flat Slab Dusted | 0 | **9** | **10** | **12** | **6** | 3 | 3 | **7** | **4** | **6** |
| EP Dusted | 0 | 1 | 1 | 1 | 0 | 0 | 1 | 1 | 2 | 0 |
| Flat Slab Sanded | 0 | 0 | 0 | 0 | 0 | 0 | 0 | **4** | 2 | **3** |
| EP Sanded | 0 | 0 | 0 | 0 | 0 | 0 | 0 | 2 | 0 | 0 |
| Flat Slab Sanded and Waxed | 0 | 0 | 0 | 0 | 0 | 0 | 0 | 1 | **4** | 0 |
| EP Sanded and Waxed | 0 | 0 | 0 | 0 | 0 | 0 | 0 | 0 | 0 | 1 |

The results of the study show the dusted elongated pellet shape was the most stable, having only one failure in the first test (see Table 6) whereas the next most stable product was the sanded+wax elongated pellet which failed five times. Additionally, the dusted elongated pellet received the best overall rating over the ten days and performed best on 6 of the 10 days based on sensory testing. The elongated pellet shape did not fail at any time during the usage test and performed better overall than the flat slab format in the sticking test. Not wishing to be bound by theory, but it is suggested that the elongated pellet shape performed better due to less surface area touching between pieces and there was less of the center layer exposed in the elongated pellet as compared to the flat slab shape.

As used herein the terms "comprising" (also "comprises," etc.), "having," and "including" is inclusive (open-ended) and does not exclude additional, unrecited elements or method steps. The singular forms "a," "an," and "the" include plural referents unless the context clearly dictates otherwise. The endpoints of all ranges directed to the same characteristic or component are independently combinable, and inclusive of the recited endpoint. The term "a combination thereof" is inclusive two or more components of the list. The term "homogeneous" refers to a uniform blend of the components.

## Claims

1. A packaged plurality of chewing gum, comprising:
a container; and
a plurality of elongated chewing gum pellets housed within the container, the elongated chewing gum pellets having a curvilinear shaped surface, and comprising a dusting composition on the surface of each elongated chewing gum pellet;
wherein each elongated chewing gum pellet is free of piece wrap and free of a coating; and
wherein the dusting composition comprises mannitol.

2. The packaged plurality of chewing gum of claim 1, wherein the dusting composition consists of mannitol.

3. The packaged plurality of chewing gum of claim 1, wherein the dusting composition consists of
mannitol, and
talc, limestone, CaCO₃, or a combination thereof.

4. The packaged plurality of chewing gum of any one of claims 1-3, wherein the dusting composition is present in an amount of 0.8 to 2.0 wt% based on the total weight of the final elongated chewing gum pellet piece, the amount measured at the time of packaging the plurality in the container.

5. The packaged plurality of chewing gum of any one of claims 1-3, wherein the dusting composition is present in an amount of 1.0 to 1.8 wt% based on the total weight of the final elongated chewing gum pellet piece, the amount measured at the time of packaging the plurality in the container.

6. The packaged plurality of chewing gum of any one of claims 1-3, wherein the dusting composition is present in an amount of 1.2 to 1.6 wt% based on the total weight of the final elongated chewing gum pellet piece, the amount measured at the time of packaging the plurality in the container.

7. The packaged plurality of chewing gum of any one of claims 1-6, wherein less than 7 elongated chewing gum pellets out of 35 stick to one another after the individual units of the plurality have been in direct contact with each other within the container for at least ten days at 37°C and a daily exposure to 80% relative humidity during which two pellets are removed from the container per day to mimic usage conditions.

8. The packaged plurality of chewing gum of any one of claims 1-7, wherein the elongated chewing gum pellet has a shape where length > width ≥ thickness; and
wherein the elongated chewing gum pellet shape and the dusting composition prevents the pellets from adhering to one another in the container and to freely pour from the container as individual units.

9. The packaged plurality of chewing gum of any one of claims 1-7, wherein the elongated chewing gum pellet has a shape where the length is greater than or equal to 2 times the width and the width is greater than or equal to 2 times the thickness.

10. The packaged plurality of chewing gum of any one of claims 1-7, wherein the elongated chewing gum pellet has a shape having a length of 18 to 45 mm, a width of 6 to 14 mm, and a thickness of 2 to 10 mm.

11. The packaged plurality of chewing gum of any one of claims 1-7, wherein the elongated chewing gum pellet has a shape having a length of 21 to 42 mm, a width of 7 to 12 mm, and a thickness of 4 to 8 mm.

12. The packaged plurality of chewing gum of any one of claims 1-7, wherein the elongated chewing gum pellet has a shape having a length of 22 to 40 mm, a width of 10 to 15 mm, and a thickness of 4 to 7 mm.

13. The packaged plurality of chewing gum of any one of claims 1-12, wherein the elongated chewing gum pellet comprises a bulk sweetener with low hygroscopicity such that the relative humidity at which water uptake starts at 20°C is greater than or equal to 80%.

14. The packaged plurality of chewing gum of any one of claims 1-12, wherein the elongated chewing gum pellet comprises gum base in an amount of 25 to 50 wt% based on the total weight of the elongated chewing gum pellet.

15. The packaged plurality of chewing gum of any one of claims 1-12, wherein the elongated chewing gum pellet comprises less than 10 wt% humectant based on the total weight of the elongated chewing gum pellet.

## Patentansprüche

1. Verpackte Vielzahl von Kaugummis, umfassend:
einen Behälter; und
eine Vielzahl länglicher Kaugummipellets, die in dem Behälter untergebracht sind, wobei die länglichen Kaugummipellets eine krummlinig geformte Oberfläche aufweisen, und umfassend eine Staubzusammensetzung auf der Oberfläche jedes länglichen Kaugummipellets;
wobei jedes längliche Kaugummipellet frei von einem Umschlagstück und frei von einer Beschichtung ist; und
wobei die Staubzusammensetzung Mannitol umfasst.

2. Verpackte Vielzahl von Kaugummis nach Anspruch 1, wobei die Staubzusammensetzung aus Mannitol besteht.

3. Verpackte Vielzahl von Kaugummis nach Anspruch 1, wobei die Staubzusammensetzung aus
Mannitol, und
Talk, Kalkstein, CaCO₃ oder einer Mischung davon besteht.

4. Verpackte Vielzahl von Kaugummis nach einem der Ansprüche 1 bis 3, wobei die Staubzusammensetzung in einer Menge von 0,8 bis 2,0 Gew.-%, bezogen auf das Gesamtgewicht des endgültigen länglichen Kaugummipelletstücks, vorliegt, wobei die Menge zum Zeitpunkt des Verpackens der Vielzahl in dem Behälter gemessen wird.

5. Verpackte Vielzahl von Kaugummis nach einem der Ansprüche 1 bis 3, wobei die Staubzusammensetzung in einer Menge von 1,0 bis 1,8 Gew.-%, bezogen auf das Gesamtgewicht des endgültigen länglichen Kaugummipelletstücks, vorliegt, wobei die Menge zum Zeitpunkt des Verpackens der Vielzahl in dem Behälter gemessen wird.

6. Verpackte Vielzahl von Kaugummis nach einem der Ansprüche 1 bis 3, wobei die Staubzusammensetzung in einer Menge von 1,2 bis 1,6 Gew.-%, bezogen auf das Gesamtgewicht des endgültigen länglichen Kaugummipelletstücks, vorliegt, wobei die Menge zum Zeitpunkt des Verpackens der Vielzahl in dem Behälter gemessen wird.

7. Verpackte Vielzahl von Kaugummis nach einem der Ansprüche 1 bis 6, wobei weniger als 7 längliche Kaugummipellets von 35 aneinander kleben, nachdem die einzelnen Einheiten der Vielzahl mindestens zehn Tage bei 37 °C und einer täglichen Exposition gegenüber 80 % relativer Feuchtigkeit in direktem Kontakt miteinander in dem Behälter gewesen sind, in denen zwei Pellets pro Tag aus dem Behälter entnommen wurden, um Verwendungsbedingungen zu simulieren.

8. Verpackte Vielzahl von Kaugummis nach einem der Ansprüche 1 bis 7, wobei das längliche Kaugummipellet eine Form aufweist, bei der Länge > Breite ≥ Dicke ist; und
wobei die längliche Kaugummipelletform und die Staubzusammensetzung ein Anhaften der Pellets aneinander in dem Behälter und ein ungehindertes Herausfallen aus dem Behälter als einzelne Einheiten verhindern.

9. Verpackte Vielzahl von Kaugummis nach einem der Ansprüche 1 bis 7, wobei das längliche Kaugummipellet eine Form aufweist, bei der die Länge größer oder gleich dem 2-Fachen der Breite ist und die Breite größer oder gleich dem 2-Fachen der Dicke ist.

10. Verpackte Vielzahl von Kaugummis nach einem der Ansprüche 1 bis 7, wobei das längliche Kaugummipellet eine Form mit einer Länge von 18 bis 45 mm, eine Breite von 6 bis 14 mm und eine Dicke von 2 bis 10 mm aufweist.

11. Verpackte Vielzahl von Kaugummis nach einem der Ansprüche 1 bis 7, wobei das längliche Kaugummipellet eine Form mit einer Länge von 21 bis 42 mm, einer Breite von 7 bis 12 mm und einer Dicke von 4 bis 8 mm aufweist.

12. Verpackte Vielzahl von Kaugummis nach einem der Ansprüche 1 bis 7, wobei das längliche Kaugummipellet eine Form mit einer Länge von 22 bis 40 mm, eine Breite von 10 bis 15 mm und eine Dicke von 4 bis 7 mm aufweist.

13. Verpackte Vielzahl von Kaugummis nach einem der Ansprüche 1 bis 12, wobei das längliche Kaugummipellet ein Bulk-Süßungsmittel mit geringer Hygroskopizität umfasst, so dass die relative Feuchtigkeit, bei der die Wasseraufnahme bei 20 °C beginnt, größer oder gleich 80 % ist.

14. Verpackte Vielzahl von Kaugummis nach einem der Ansprüche 1 bis 12, wobei das längliche Kaugummipellet Kaugummibasis in einer Menge von 25 bis 50 Gew.-%, bezogen auf das Gesamtgewicht des länglichen Kaugummipellets, umfasst.

15. Verpackte Vielzahl von Kaugummis nach einem der Ansprüche 1 bis 12, wobei das längliche Kaugummipellet weniger als 10 Gew.-% Feuchthaltemittel, bezogen auf das Gesamtgewicht des länglichen Kaugummipellets, umfasst.

## Revendications

1. Pluralité emballée de chewing-gums, comprenant :
un contenant ; et
une pluralité de dragées de chewing-gum allongées logées au sein du contenant, les dragées de chewing-gum allongées ayant une surface profilée curviligne, et comprenant une composition de poudrage sur la surface de chaque dragée de chewing-gum allongée ;
dans laquelle chaque dragée de chewing-gum allongée est exempte d'enveloppement de pièce et exempte d'enrobage ; et
dans laquelle la composition de poudrage comprend du mannitol.

2. Pluralité emballée de chewing-gums selon la revendication 1, dans laquelle la composition de poudrage est constituée de mannitol.

3. Pluralité emballée de chewing-gums selon la revendication 1, dans laquelle la composition de poudrage est constituée de
mannitol, et
de talc, de calcaire, de CaCO₃, ou d'une combinaison de ceux-ci.

4. Pluralité emballée de chewing-gums selon l'une quelconque des revendications 1 à 3, dans laquelle la composition de poudrage est présente en une quantité de 0,8 à 2,0 % en poids sur la base du poids total de la pièce finale de dragée de chewing-gum allongée, la quantité mesurée au moment de l'emballage de la pluralité dans le contenant.

5. Pluralité emballée de chewing-gums selon l'une quelconque des revendications 1 à 3, dans laquelle la composition de poudrage est présente en une quantité de 1,0 à 1,8 % en poids sur la base du poids total de la pièce finale de dragée de chewing-gum allongée, la quantité mesurée au moment de l'emballage de la pluralité dans le contenant.

6. Pluralité emballée de chewing-gums selon l'une quelconque des revendications 1 à 3, dans laquelle la composition de poudrage est présente en une quantité de 1,2 à 1,6 % en poids sur la base du poids total de la pièce finale de dragée de chewing-gum allongée, la quantité mesurée au moment de l'emballage de la pluralité dans le contenant.

7. Pluralité emballée de chewing-gums selon l'une quelconque des revendications 1 à 6, dans laquelle moins de 7 dragées de chewing-gum allongées sur 35 collent les unes aux autres après que les unités individuelles de la pluralité ont été en contact direct les unes avec les autres au sein du contenant pendant au moins dix jours à 37 °C et une exposition quotidienne à 80 % d'humidité relative pendant laquelle deux dragées sont retirées du contenant par jour pour simuler des conditions d'utilisation.

8. Pluralité emballée de chewing-gums selon l'une quelconque des revendications 1 à 7, dans laquelle la dragée de chewing-gum allongée a une forme où longueur > largeur ≥ épaisseur ; et
dans laquelle la forme de dragée de chewing-gum allongée et la composition de poudrage empêchent les dragées d'adhérer les unes aux autres dans le contenant et de se déverser librement du contenant en tant qu'unités individuelles.

9. Pluralité emballée de chewing-gums selon l'une quelconque des revendications 1 à 7, dans laquelle la dragée de chewing-gum allongée a une forme où la longueur est supérieure ou égale à 2 fois la largeur et la largeur est supérieure ou égale à 2 fois l'épaisseur.

10. Pluralité emballée de chewing-gums selon l'une quelconque des revendications 1 à 7, dans laquelle la dragée de chewing-gum allongée a une forme ayant une longueur de 18 à 45 mm, une largeur de 6 à 14 mm et une épaisseur de 2 à 10 mm.

11. Pluralité emballée de chewing-gums selon l'une quelconque des revendications 1 à 7, dans laquelle la dragée de chewing-gum allongée a une forme ayant une longueur de 21 à 42 mm, une largeur de 7 à 12 mm et une épaisseur de 4 à 8 mm.

12. Pluralité emballée de chewing-gums selon l'une quelconque des revendications 1 à 7, dans laquelle la dragée de chewing-gum allongée a une forme ayant une longueur de 22 à 40 mm, une largeur de 10 à 15 mm et une épaisseur de 4 à 7 mm.

13. Pluralité emballée de chewing-gums selon l'une quelconque des revendications 1 à 12, dans laquelle la dragée de chewing-gum allongée comprend un édulcorant de charge avec une faible hygroscopicité de telle sorte que l'humidité relative à laquelle une absorption d'eau démarre à 20 °C est supérieure ou égale à 80 %.

14. Pluralité emballée de chewing-gums selon l'une quelconque des revendications 1 à 12, dans laquelle la dragée de chewing-gum allongée comprend une base de gomme en une quantité de 25 à 50 % en poids sur la base du poids total de la dragée de chewing-gum allongée.

15. Pluralité emballée de chewing-gums selon l'une quelconque des revendications 1 à 12, dans laquelle la dragée de chewing-gum allongée comprend moins de 10 % en poids d'humectant sur la base du poids total de la dragée de chewing-gum allongée.
